# EUROPEAN PATENT APPLICATION

(11) **EP 1 758 377 A2**
(43) Date of publication of application: **28.02.2007**
(21) Application number: 06119196.1
(22) Date of filing: 18.08.2006
(51) Int. Cl.: H04N 5/44

(54) **Control method and system based on preset mode**

(30) Priority: 23.08.2005 KR 20050077374
(71) Applicant: SAMSUNG ELECTRONICS CO., LTD., Suwon-city, Kyungki-do 442-742 (KR)
(72) Inventor: Kim, Eun-hui, Seoul (KR); Ko, Jae-woo, Poil-dong, Uiwang-si, Gyeonggi-do (KR)
(74) Representative: Robinson, Ian Michael

(57) **Abstract**

Disclosed are control method and system based on a preset mode, and more particularly to a control method and system based on a preset mode, wherein key code values of a plurality of external input channels are selectively set for an image output device (300) and an audio-output device so a source-input device, an image output device (300), and an audio-output device are controlled simultaneously by simple inputs from a remote controller (500) having a separate power-on and power-off button as well as a setting button.

## Description

The present invention relates to a control method and system so a source-input device, an image output device, and an audio-output device are controlled.

Typically, images and sound outputted in home appliance devices are outputted separately. As such, television (TV) displays images, and a separate device such as an audio/video (AV) receiver or an amplifier outputs audio signals. There are a variety of set top boxes (hereinafter, referred to as "STB") that allow users to watch a variety of digital content. STB refers to an electronic device on top of a TV set, i.e., a device connected to the TV in order to receive cable, satellite broadcasting or Internet content via its own browser. Digital broadcasting transmits digitally compressed images and audio data in approximately 100 channels. Unlike analog technology, where only one channel is broadcasted via a single repeater, digital-image compression technology makes multi-channel broadcasting available using a single repeater. The STB is used in order to reproduce digitally-transmitted broadcasting signals that are transmitted to a TV. The STB can be a satellite STB, cable STB, terrestrial STB, or an IP-STB. Because such STB outputs are divided into image outputs and audio outputs, a user needs to convert external inputs of an image output device and an audio output device according to the STB output. Some conventional technologies for removing this inconvenience exist in the prior art, which are disclosed in Japanese Unexamined Patent Publication No. 1999 - 344337, US patent No. 6,744,752, and Japanese Unexamined Patent Publication No. 2003 - 032508 have disclosed representative technologies.

Japanese Unexamined Patent Publication No. 1999 - 344337 discloses a TV receiver that receives a power-ON signal from a remote controller and an external input, and automatically converts them to preset external inputs by presetting an input mode. In contrast, it is an aspect of the present invention to provide a method in which an external input is automatically converted upon receipt of a predetermined key code value of a remote controller by separately mapping external inputs of an image-output device and an audio output device in order to convert the inputs to corresponding key code values of the remote controller.

US patent No. 6,744,752 discloses an apparatus for controlling devices such as a STB, VCR and TV connected via a local area network (LAN) including a plurality of parts. In contrast, the present invention does not provide a method for controlling devices connected via a LAN.

Japanese Unexamined Patent Publication No. 2003 - 032508 discloses a method of connecting a display apparatus and a STB or a DVD player to a serial bus in order to control them using a single remote controller. In contrast, the present invention provides a method in which an external input is automatically converted as soon as an image-output device and an audio-output device are turned on by integrating and transmitting key code values of the devices.

Conventional methods in which connections are set between devices using serial ports or cables have configuration problems as serial ports need to be opened for each device and cables need to be connected to each device. Accordingly, in order to implement such methods, a significant monetary investment is required to modify conventional devices. In addition, it is inconvenient to have to conduct requisite on-screen display (OSD) operations.

Moreover, the conventional methods in which external inputs are directly detected and ports therewith are opened in order to output a source in an image output device have a problem in that an image output device or an audio output device needs to be independently operated.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

An aspect of the present invention is to provide a control method and a system based on a preset mode in which a user can control an image output device, an audio output device, and a source-input device at the same time once a setting has been made.

Another aspect of the present invention is to provide a control method and system based on a preset mode, wherein key code values of a plurality of external input channels are selectively set for an image output device and an audio-output device so a source-input device, an image output device, and an audio-output device are controlled at the same time by a simple button input of a remote controller.

According to an aspect of the present invention, there is provided a control method based on a preset mode in a system including an image output device, an audio output device, a plurality of source input devices, and a remote controller that transmits signals to each device. The method includes: setting a plurality of image-input channels to the image output device, and setting a plurality of audio-input channels to the audio output device; transmitting an integrated signal by a power-on button of the remote controller when a service mode is selected by a first source input device via the remote controller; outputting images and sound provided by the first source input device via the integrated signal as soon as the first source input device is turned on, and the image output device and audio output device turning on by receiving key codes corresponding to a first predetermined image-input channel and a first predetermined audio-input channel set by a user in advance; transmitting an integrated signal by a power-on button of the remote controller when a service mode is selected by a second source input device via the remote controller; and outputting images and sound provided by the second source input device via the integrated signal as soon as the power of the second source input device is turned on by the integrated signal, and the power of the image output device and the audio output device turning on by receiving key codes corresponding to a second predetermined image-input channel and a predetermined second audio-input channel via the integrated signal

According to another aspect of the present invention, there is provided a control system including an image output device including an image-channel setting unit that allocates a key code value to a plurality of image input channels, and maps a predetermined image input standard to the allocated key code value; an audio output device including an audio-channel setting unit that allocates a key code value to a plurality of audio-input channels, and maps a predetermined sound input standard to the allocated key code value; a remote controller that has separate power-on and power-off buttons, and a setting button that sets a specific image-input channel and audio-input channel among a plurality of image-input channels and audio-input channels where the key code values are allocated; and a first source-input device that inputs a first source image and a first source sound to the image output device and the audio output device, which are turned on by receiving key codes corresponding to a first predetermined image-input channel and a first predetermined audio-input channel as soon as the remote controller is turned on by an integrated signal generated by a power-on button. The control system may further include a second source-input device that inputs a second source image and a second source sound to the image output device and the audio output device, which are turned on by receiving key codes corresponding to a second predetermined image-input channel and a second predetermined audio-input channel as soon as the remote controller is turned on by an integrated signal generated by a power-on button.

The above and other features and aspects of the present invention will become more apparent by describing in detail exemplary embodiments thereof with reference to the attached drawings in which:
Figure 1 illustrates a configuration of a control system based on a preset mode according to an exemplary embodiment of the present invention;
Figure 2 depicts a configuration of key buttons of a remote controller in a control system based on a preset mode according to an exemplary embodiment of the present invention;
Figure 3 is a flow chart illustrating a control method based on a preset mode according to an exemplary embodiment of the present invention;
Figure 4 illustrates setting an image input channel and a sound input channel.

Features of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art. Like reference numerals refer to like elements throughout the specification.

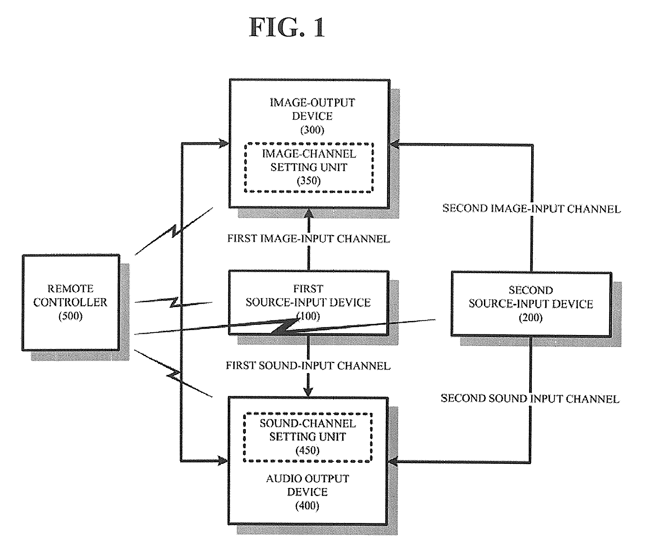

Figure 1 illustrates a configuration of a control system based on a preset mode according to an exemplary embodiment of the present invention. The system includes a first source-input device 100, a second-source input device 200, an image-output device 300 including an image-channel setting unit 350, an audio-output device 400 including a sound-channel setting unit 450, and a remote controller 500.

First, the image output device 300 displays images and may include a digital television (DTV). The image-output device 300 includes the image-channel setting unit 350 that allocates a key code value to each image input channel, and maps a predetermined image input standard to the allocated key code value.

The audio output device 400 is a device that outputs sound and includes an AV receiver that decodes and amplifies digital signals and speakers that directly output the amplified sounds. The audio output device 400 includes the sound-channel setting unit 450 that allocates a key code value to each audio input channel, and maps a predetermined audio input standard to the allocated key code value.

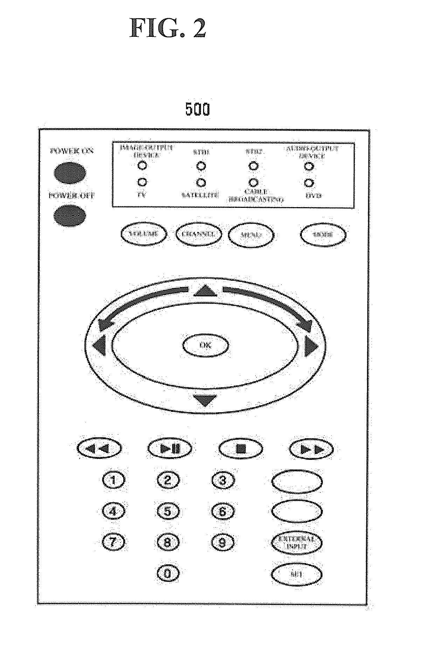

The remote controller 500 controls each device by transmitting infrared (IR) signals to each device. The remote controller 500 includes separate power-on and power-off buttons as opposed to having a single power on/off button that toggles between on and off. The remote controller 500 also includes a setting button that sets a specific image input channel and an audio input channel among a plurality of image input channels and audio input channels where each of the input channels are allocated with a key code value. Figure 2 depicts a configuration of key buttons of a remote controller 500 in a control system based on a preset mode according to an exemplary embodiment of the present invention.

Referring to Figure 2, the remote controller 500 includes separate power-on and power-off buttons as opposed to having a single power on/off button that toggles the power on and off. Accordingly, each of the on and off buttons has its own key value. The remote controller 500 also has a setting button at the bottom right, which sets a specific image input channel and an audio-input channel among a plurality of image-input channels and audio-input channels where each of the input channels are allocated with a keycode value. In a preset mode where a first source input device 100, a second source input device 200, and an image output device are concurrently turned on upon concurrent receipt of power-on signal from the remote controller 500, if a button toggles between power on and power off, one of the devices may not receive a power-on signal, and thus will stay turned off, whereas the rest will turn on. If the power-on button is pressed again for the device that has not received the power-on signal, the device that did not receive the power-on signal will turn on, whereas the devices that have received the power-on signals will turn off. Accordingly, a remote controller separately provides for power-on and power-off buttons.

At the top of the remote controller 500, service modes available for 4 devices are exemplarily shown. The image output device may provide terrestrial DTV or analog broadcasts; STB 1 and STB 2 may provide cable and satellite broadcasts; and the audio output device may provide audio output from a digital versatile disc (DVD) player.

The first source input device 100 is turned on by an integrated signal generated by pressing a power-on button of the remote controller 500. Consequently, the image output device 300 and the audio output device 400 are turned on when a key code corresponding to a predetermined first image input channel and a first audio input channel are received through the integrated signal. The first source input device inputs image to the image output device 300 and sound to the audio output device 400.

The second source input device 200 is turned on by an integrated signal generated by pressing a power-on button of the remote controller 500. Consequently, the image output device 300 and the audio output device 400 are turned on when a key code corresponding to a predetermined second image input channel and a second audio input channel are received by the integrated signal. The second source input device inputs image to the image output device 300 and sound to the audio output device 400.

Here, the image input standard may include the high-definition multimedia interface (HDMI) standard, the digital visual interface (DVI) standard, the component standard, the composite standard, and the SuperVideo standard. The sound input standard may include the Sony/Philips digital interface (SPDIF) standard and an Aux standard. The detailed descriptions thereof will be omitted since these technologies are commonly known in the art.

Exemplarily, the image output device 300 may be a DTV, the audio output device an AV receiver, and a plurality of source input devices may include a DVD player, a satellite broadcasting STB, a cable broadcasting STB, and an IP STB.

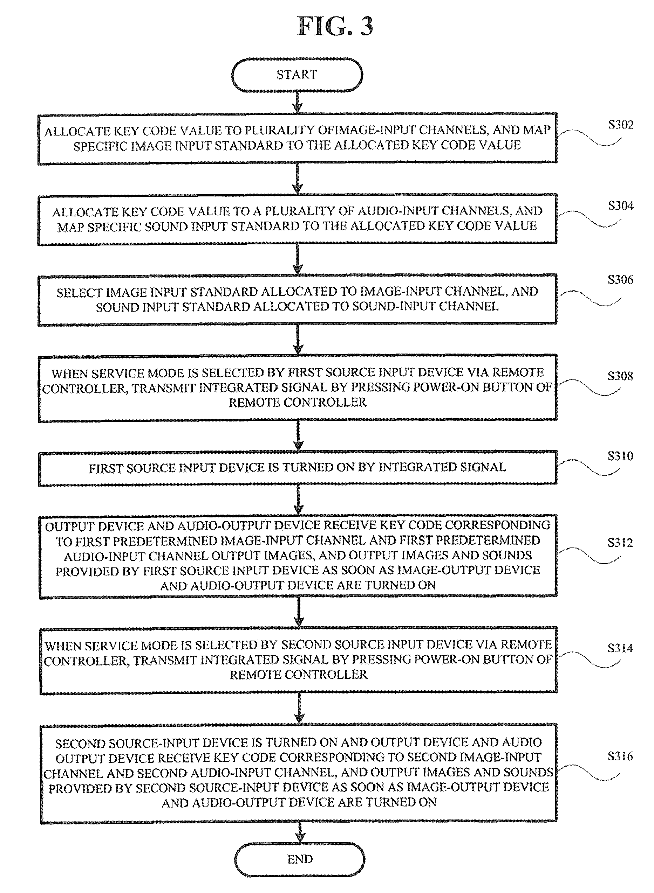

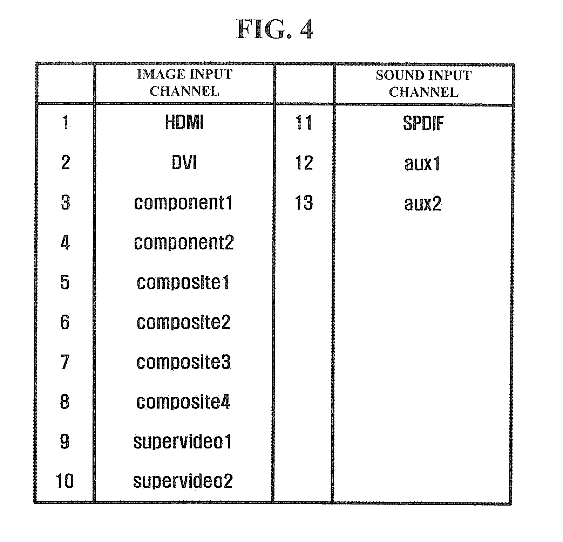

The flow of a control method according to an exemplary embodiment of the present invention will be described with reference to Figures 3 and 4. Figure 3 is a flow chart illustrating a control method based on a preset mode according to an exemplary embodiment of the present invention. Figure 4 illustrates setting an image input channel and a sound input channel.

An image-channel setting unit 350 in an image output device 300 allocates a key code value to each image input channel, and maps a specific image input standard to the allocated key code value (S302). Likewise, an audio-channel setting unit 450 in an audio output device 400 allocates a key code value to each audio-input channel, and maps a specific audio input standard to the allocated key code value (S304), as illustrated in the table of Figure 4. The HDMI standard, DVI standard, Component standard, Composite standard, and SuperVideo standard are mapped from 1 to 10 of the image input channels. The SPDIF standard and the Aux standards are mapped from 11 to 13 of the sound input channels.

In response to a command from the remote controller 500, the image-channel setting unit 350 selects an image input standard corresponding to a specific key code value among the key code values allocated to the image input standard, and the audio-channel setting unit 450 selects an audio input standard corresponding to a specific key code value among the key code values allocated to the sound input standard (S306). For example, the first image-input channel may select the DVI standard in 2, the first audio-input channel may select the SDIF in 11, the second image-input channel may select component 2 in 4, and the second audio-input channel may select Aux 2 in 13.

When a service mode is selected by the first source input device 100 via the remote controller 500, and an integrated signal by a power-on button of the remote controller 500 is transmitted (S308), the first source input device 100 is turned on by the integrated signal (S310).

Here, an integrated signal refers to a signal that includes key codes corresponding to a power-on signal of a first source input device 100, and an external input signal of an image output device 300 and an audio output device 400.

The image output device 300 and the audio output device 400 output images and sound provided by the first source input device 100 as soon as the devices are turned on by receiving key codes corresponding to the first predetermined image-input channel and the first predetermined audio-input channel in a stand-by mode via the integrated signal (S312). According to the above example, the DVI standard is selected in order to output the images in the first image-input channel, and the SPFIF standard is selected in order to output the sounds in the first audio-input channel.

Conventionally, without using the aforementioned method of the present invention, it would be necessary to use five key codes at the same time. That is, a power-on key code of an image output device 300, a power-on key code of an audio output device 400, an image-input key code, an audio-input key code, and a power-on key code of a first source input device 100 would need to be transmitted. However, the number of key codes can be reduced from 5 to 3 by using the aforementioned method of the present invention.

Further, when a service mode is selected by the second source input device 200 via the remote controller 500, and an integrated signal by a power-on button of the remote controller 500 is transmitted (S314), the second source input device 200 is turned on by the integrated signal. The image output device 300 and the audio output device 400 output images and sound provided by the second source input device 200 as soon as the devices are turned on by receiving key codes corresponding to the second predetermined image-input channel and the second predetermined audio-input channel in a stand-by mode via the integrated signal (S316).

According to the above example, the component 2 standard is selected in order to output the images in the second image-input channel, and the Aux 2 standard is selected in order to output the sound in the second audio-input channel.

The image output device 300 is a DVD player and the audio output device may be an AV receiver. The plurality of source input devices may include a DVD player, a satellite broadcasting STB, a cable broadcasting STB, and an IP STB.

It should be understood that the scope of the present invention also includes a recording medium that stores a machine-readable program executing a control method based on a preset mode described in the above exemplary embodiments of the present invention.

As described above, according to exemplary embodiments of the present invention, a setting can be set for an external channel in an image output device and an audio output device, and a user can control the devices based on a preset mode. That is, a user can efficiently control several devices by the simple operation of a remote controller based on the preset mode.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A control method based on a preset mode in a system including an image output device (300), an audio output device (400), a plurality of source input devices (100, 200), and a remote controller (500) that transmits signals to each device (100, 200, 300, 400), the method comprising:
(a) setting a plurality of image-input channels in the image output device (300), and setting a plurality of audio-input channels in the audio output device (400);
(b) transmitting a first integrated signal by a power-on button of the remote controller (500) when a service mode is selected by a first source input device (100) via the remote controller (500); and
(c) outputting images and sound provided by the first source input device (100) upon receipt of the first integrated signal as soon as the first source input device (100) is turned on,
wherein the image output device (300) and the audio output device (400) are turned on by receiving key codes corresponding to a first predetermined image-input channel and a first predetermined audio-input channel via a preset by a user.

2. The method of claim 1, further comprising:
(d) transmitting a second integrated signal by the power-on button of the remote controller (500) when a service mode is selected by a second source input device (200) via the remote controller (500); and
(e) outputting images and sounds provided by the second source input device (200) upon receipt of the second integrated signal as soon as the power of the second source input device (200) is turned on,
wherein the power of the image output device (300) and the audio output device (400) are turned on by receiving key codes corresponding to a second predetermined image-input channel and a second predetermined audio-input channel via the second integrated signal

3. The method of claim 1 or 2, wherein the step (a) comprises:
(a-a') allocating a key code value to each of the plurality of image input channels, and mapping a specific image input standard to the allocated key code value; and
(a-b') allocating a key code value to each of the plurality of sound input channels, and mapping a specific sound input standard to the allocated key code value.

4. The method of claim 3, further comprising:
(a-c') selecting an image input standard corresponding to a specific key code value among the key code values allocated to the image-input channel, and selecting an audio input standard corresponding to a specific key code value among the key code values allocated to the audio-input channel via the remote controller (500).

5. The method of claim 3, wherein the image input standard is one of a high-definition multimedia interface (HDMI) standard, a digital visual interface (DVI) standard, a Component standard, a Composite standard, and a SuperVideo standard, and the audio input standard is one of a Sony/Philips digital interface (SPDIF) standard and an Aux standard.

6. The method of any preceding claim, wherein the image output device (300) is a digital television (DTV), the audio output device (400) is an Audio-visual (AV) receiver, and the plurality of source input devices (100, 200) include a digital versatile disc (DVD) player, a satellite broadcasting set top box (STB), a cable broadcasting STB, and an Internet protocol (IP) STB.

7. The method of claim 6, wherein the remote controller (500) comprises a separate power-on and power-off buttons.

8. A control system based on a preset mode comprising:
an image output device (300) comprising an image-channel setting unit (350) that allocates a key code value to a plurality of image input channels and maps a predetermined image input standard to the allocated key code value;
an audio output device (400) comprising an audio-channel setting unit (450) that allocates a key code value to a plurality of audio-input channels and maps a predetermined sound input standard to the allocated key code value;
a remote controller (500) that has separate power-on and power-off buttons and a setting button that sets a specific image-input channel and audio-input channel among the plurality of image-input channels and the plurality of audio-input channels where each of the plurality of image-input channels and each of the plurality of audio-input channels are allocated with a key code; and
a first source input device (100) that inputs a first source image and a first source sound to the image output device (300) and the audio output device (400) which are turned on upon receipt of key codes corresponding to a first predetermined image-input channel and a first predetermined audio-input channel.

9. The system of claim 8, wherein the first source input device (100) is turned on as soon as a first integrated signal generated by the power-on button of the remote controller (500) is received.

10. The system of claim 9, further comprising:
a second source input device (200) that inputs a second source image and a second source sound to the image output device (300) and the audio output device (400), which are turned on upon receipt of key codes corresponding to a second predetermined image-input channel and a second predetermined audio-input channel.

11. The system of claim 10, wherein the second source input device (200) is turned on as soon as a second integrated signal generated by the power-on button of the remote controller (500) is received.

12. The system of any of claims 8 to 11, wherein the image input standard is one of a high-definition multimedia (HDMI) standard, a digital visual interface (DVI) standard, a Component standard, a Composite standard, and SuperVideo standard, and the sound input standard is one of a Sony/Philips digital interface (SPDIF) standard and an Aux standard.

13. The system of any of claims 8 to 12, wherein the image output device (300) is a digital television (DTV), the audio output device (400) is an audio-visual (AV) receiver, and the plurality of source input devices (100, 200) include a digital versatile disc (DVD) player, a satellite broadcasting set top box (STB), a cable broadcasting STB, and an internet protocol (IP) STB.

14. A computer readable medium storing machine-readable program instructions for implementing a control method according to any of claims 1 to 7.
